Europäisches Patentamt

European Patent Office

Office européen des brevets

(19)

(11) Veröffentlichungsnummer: **0 041 159**
**B1**

(12) # EUROPÄISCHE PATENTSCHRIFT

(45) Veröffentlichungstag der Patentschrift:
22.02.84

(51) Int. Cl.³: **B 60 R 21/10**

(21) Anmeldenummer: **81103661.5**

(22) Anmeldetag: **13.05.81**

(54) **Kraftfahrzeug mit einem passiven Gurtsystem.**

(30) Priorität: **03.06.80 DE 8014800 U**

(43) Veröffentlichungstag der Anmeldung:
**09.12.81 Patentblatt 81/49**

(45) Bekanntmachung des Hinweises auf die Patenterteilung:
**22.02.84 Patentblatt 84/8**

(84) Benannte Vertragsstaaten:
**DE FR GB IT SE**

(56) Entgegenhaltungen:
**DE - A - 2 643 818
DE - U - 8 014 800
FR - A - 2 439 595
GB - A - 2 028 631
US - A - 4 193 613**

(73) Patentinhaber: **BAYERISCHE MOTOREN WERKE
Aktiengesellschaft, Postfach 40 02 40,
D-8000 München 40 (DE)**

(72) Erfinder: **Wimmer, Robert, Ing. grad., Oberlaufing 3,
D-8017 Ebersberg (DE)**
Erfinder: **Leval, Laslo, Dipl.-Ing., Schäftlarnstrasse 145,
D-8000 München 70 (DE)**

(74) Vertreter: **Dexheimer, Rolf, Bayerische Motoren Werke
Aktiengesellschaft Postfach 40 02 40 Petuelring 130 -
AJ-21, D-8000 München 40 (DE)**

Kraftfahrzeug mit einem passiven Gurtsystem

Die Erfindung bezieht sich auf ein Kraftfahrzeug mit einem passiven Gurtsystem gemäß der im Oberbegriff des Hauptanspruches beschriebenen Bauart.

Ein Kraftfahrzeug mit einem derartigen Gurtsystem ist in der DE-A-2 643 818 bereits vorgeschlagen worden. Aufgabe der Erfindung ist es, dieses System so zu verbessern, daß das Gurtband beim An- oder Ablegen an bzw. vom Fahrzeuginsassen nicht in die Nähe seines Kopfes kommt bzw. dessen Kopf nicht berührt.

Diese Aufgabe wird mit den im Kennzeichen des Hauptanspruches angegebenen Mitteln gelöst.

Mit der Erfindung ergibt sich der Vorteil, daß der Diagonal-Sicherheitsgurt beim selbsttätigen Ablegen vom Fahrzeuginsassen zuerst schräg nach vorne oben zum oberen Endbereich des vorderen Türpfostens weggebracht ist und durch die Verlagerung des Umlenkelementes in Richtung Dachholm schließlich entlang dem oberen Türausschnitt verlaufend angeordnet ist. Durch das Entfernen des Sicherheitsgurtes schräg nach vorne oben bzw. das Anlegen des Sicherheitsgurtes in umgekehrter Richtung von oben schräg nach unten ist mit Sicherheit eine Berührung des Gurtbandes mit dem Kopf des Fahrzeuginsassen vermieden.

Die Erfindung ist anhand eines in der Zeichnung dargestellten Ausführungsbeispiels beschrieben. Die Zeichnung zeigt

Fig. 1 einen passiven Diagonal-Sicherheitsgurt für den Beifahrersitz in einem abschnittsweise dargestellten Personenkraftwagen und in

Fig. 2 mit 4 den Sicherheitsgurt in verschiedenen Stationen des Ab- bzw. Anlegens.

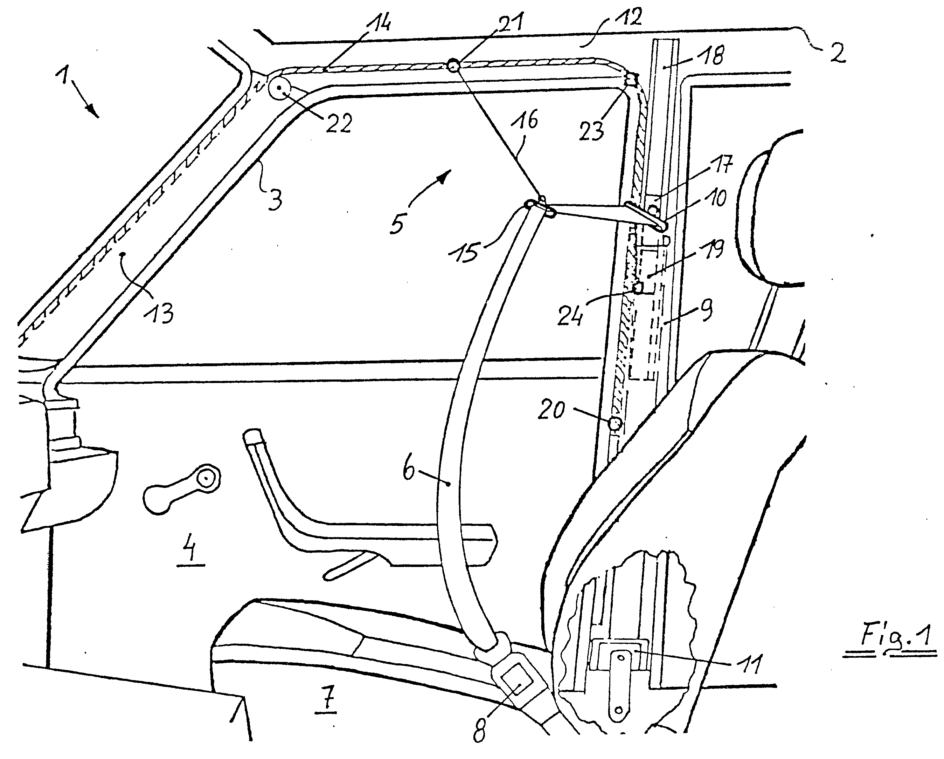

Ein in Fig. 1 abschnittsweise dargestelltes Kraftfahrzeug 1 weist einen an der Fahrzeugkarosserie 2 entlang dem oberen Rand eines Türausschnittes 3 einer vorderen Seitentür 4 über eine im wesentlichen durch Seitentürbewegungen gesteuerte Vorrichtung 5 verlagerbaren Diagonal-Sicherheitsgurt 6 auf. Der Sicherheitsgurt 6 ist etwa in Fahrzeugmittenebene an einem Sitz 7 über ein Schloß 8 verankert und verläuft über ein in Schulterhöhe des Fahrzeuginsassen am hinteren Türpfosten 9 höhenverstellbar angeordnetes Umlenkelement 10 zu einem im hinteren Türpfosten 9 angeordneten Aufrollautomaten 11. Das Umlenkelement 10 ist als bekannter Durchlaufbeschlag ausgebildet. Die Vorrichtung 5 weist entlang dem Türausschnitt 3, der im wesentlichen vom hinteren Türpfosten 9, vom oberen Dachholm 12 und vom vorderen Türpfosten 13 begrenzt ist, ein Transportkabel 14 auf. Das Transportkabel 14 ist vorzugsweise eine biegsame Zahnstange, die in einem der Länge nach geschlitzten Rohr geführt ist. Es wirkt mit einem elektrischen Antrieb zusammen, der über durch die Bewegungen der Seitentür 4 betätigte Schalter gesteuert ist.

Wie aus der Fig. 1 ersichtlich, ist am Sicherheitsgurt 6 zwischen dem Schloß 8 und dem Umlenkelement 10 ein Mitnehmer 15 angeordnet, der mit dem Sicherheitsgurt 6 gleitbeweglich in Verbindung steht. Der Mitnehmer 15 ist mit dem Transportkabel 14 über ein Seil 16 von konstanter Länge fest verbunden. Der Fig. 1 ist weiter zu entnehmen, daß das Umlenkelement 10 mit einem Gleitstück 17 verbunden ist, das in einer aus dem Bereich der Schulterhöhe über den oberen Endbereich des hinteren Türpfostens 9 hinaus verlängerten Führung 18 verschiebebeweglich angeordnet ist. Dem Gleitstück 17 ist in der Führung 18 ein verschieb- und verriegelbarer Anschlag 19 zugeordnet, der zur Erzielung eines günstigen Verlaufes des Sicherheitsgurtes 6 über die Schulter des Fahrzeuginsassen zur Höheneinstellung des Umlenkelementes 10 im Bereich der Schulterhöhe des Fahrzeuginsassen dient. Zur Verschiebung in den oberen Endbereich des Türpfostens 9 wirkt das Gleitstück 17 mit einem Greifer 20 zusammen, der am Transportkabel 14 in einem festen Abstand von der Anlenkung 21 des Seiles 16 angeordnet ist. Für das Seil 16 ist im oberen Endbereich des vorderen Türpfostens 13 eine karosseriefest angeordnete Ablenkeinrichtung 22 vorgesehen, die beispielsweise als Rolle ausgebildet ist.

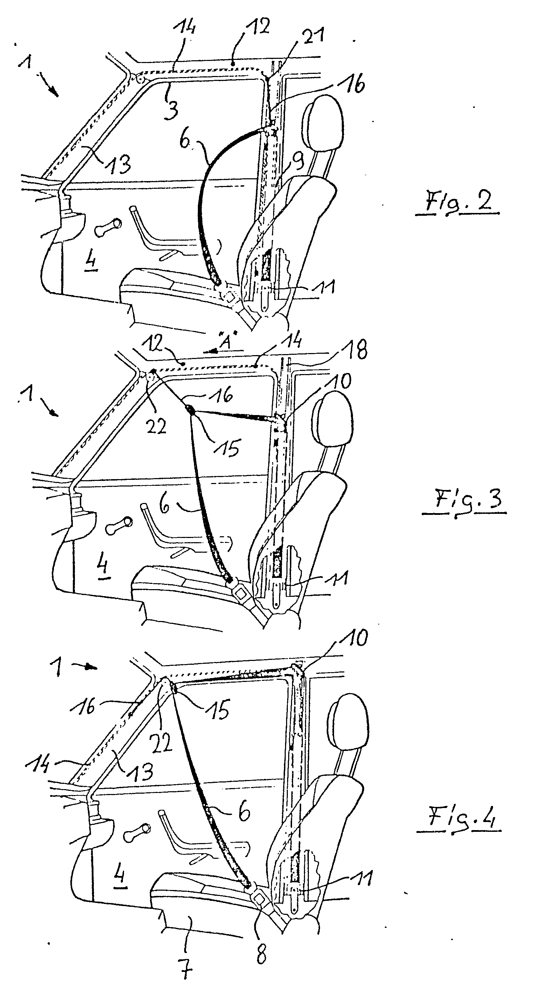

Die Fig. 2 zeigt den Verlauf des Diagonal-Sicherheitsgurtes 6 an einem nicht dargestellten Fahrzeuginsassen nach dem An- bzw. vor dem Ablegen. Hierbei befindet sich die Anlenkung 21 des Seiles 16 am Transportkabel 14 im Bereich des hinteren Türpfostens 9, so daß das Seil 16 zum Mitnehmer 15 außerhalb des Türausschnittes 3 dem Türpfosten 9 benachbart verläuft.

Durch Öffnen der Seitentür 4 wird ein nicht gezeigter Schalter betätigt, durch den der elektrische Antrieb des Transportkabels 14 derart angesteuert ist, daß das Transportkabel gemäß der Pfeilrichtung A in Fig. 3 bewegt ist.

Damit verbunden ist eine Verlagerung der Anlenkung 21 des Seiles 16 entlang dem Dachholm 12, wobei das Seil 16 von konstanter Länge den Sicherheitsgurt 6 vom Fahrzeuginsassen schräg nach vorne oben entfernt, Fig. 3.

Bei der weiteren Verlagerung der Seilanlenkung 21 vom Dachholm 12 zum vorderen Türpfosten 13 ist das Seil 16 über die als Ablenkeinrichtung 22 dienende Rolle geführt, wodurch ein weiteres Ablegen nach vorne oben des Sicherheitsgurtes 6 bis zum Türausschnitt 3 erzielt ist, Fig. 4. Etwa mit dem Beginn der Ablenkung des Seiles 16 wird das das Umlenkelement 10 tragende Gleitstück 17 vom Greifer 20 am Transportkabel 14 erfaßt und in den oberen Endbereich des Türpfostens 9 bzw. in den Dachholm 12 verlagert. Aus Fig. 4 ist ersichtlich, daß am Ende des Ablegens des Sicherheitsgurtes 6 vom Fahrzeuginsassen ein Abschnitt des Sicherheitsgurtes über dem Türausschnitt 3 entlang dem Dachholm 12 abgelegt ist, wobei das Band des Sicherheitsgurtes 6 vom Aufrollautomaten 11 über das Umlenkelement 10 am Dachholm 12 zu dem bei der Ablenkrolle 22 befindlichen Mitnehmer 15 verläuft und von hier aus zum Gurtschloß 8 an der Innenseite des Sitzes 7.

Beim Schließen der Seitentüre 4 läuft der Vorgang in umgekehrter Richtung ab, wobei ein am Transportkabel 14 angeordneter Nocken 23 durch Betätigung eines Endschalters 24 am Anschlag 19 den Vorgang beendet.

Durch die mittelbare Verbindung des Sicherheitsgurtes 6 mit dem Transportkabel 14 über das Seil 16 ist sichergestellt, daß in der Anfangsphase des Ablegens des Sicherheitsgurtes 6 sowie in der Endphase des Anlegens des Sicherheitsgurtes 6 dieser nicht mit dem Kopf des Fahrzeuginsassen in Berührung kommt.

**Patentansprüche**

1. Kraftfahrzeug mit einem passiven Gurtsystem,

— das einen an der Fahrzeugkarosserie (2) entlang dem oberen Rand eines Türausschnittes (3) einer vorderen Seitentür (4) über eine im wesentlichen durch Seitentürbewegungen gesteuerten Vorrichtung (5) verlagerbaren Diagonal-Sicherheitsgurt (6) aufweist,
— der etwa in Fahrzeugmittenebene an einem Sitz (7) über ein Schoß (8) verankert ist und
— über ein in Schulterhöhe des Fahrzeuginsassen am hinteren Türpfosten (9) höhenverstellbar angeordnetes Umlenkelement (10) verläuft zu
— einem im hinteren Türpfosten (9) angeordneten Aufrollautomaten (11), und ferner
— die Vorrichtung (5) ein entlang dem Türausschnitt (3) angeordnetes Transportkabel (14) aufweist,
— das mit einem durch die Seitentürbewegungen betätigten Schalter gesteuerten elektrischen Antrieb zusammenwirkt und
— das mit dem Sicherheitsgurt (6) über einen Mitnehmer (15) in Verbindung steht,

dadurch gekennzeichnet,

— daß der am Sicherheitsgurt (6) gleitbeweglich angeordnete Mitnehmer (15) mit dem Transportkabel (14) über ein Seil (16) von konstanter Länge fest verbunden ist,
— daß das Umlenkelement (10) in einer aus dem Bereich der Schulterhöhe über den oberen Endbereich des hinteren Türpfostens (9) hinaus verlängerten Führung (18) verschiebebeweglich angeordnet ist und
— im Bereich der Schulterhöhe durch einen in der Führung verschieb- und verriegelbaren Anschlag (19) höheneinstellbar ist,
— daß am Transportkabel in seinem im hinteren Türpfosten verlaufenden Abschnitt ein in festem Abstand von der Ablenkung (21) des Seiles (16) angeordneter Greifer (20) vorgesehen ist zur
— Verlagerung des Umlenkelementes (10) in den oberen Endbereich des hinteren Türpfostens (9) in der Endphase der Gurtfreigabe,
— während der das Seil (16) über eine im oberen Endbereich des vorderen Türpfosten (13) karosseriefest angeordnete Ablenkeinrichtung (22) geführt ist.

2. Gurtsystem nach Anspruch 1, dadurch gekennzeichnet, daß die Ablenkeinrichtung (22) eine Rolle ist.

3. Gurtsystem nach Anspruch 1, dadurch gekennzeichnet, daß am Anschlag (19) ein Endschalter (24) angeordnet ist, der von einem am Transportkabel (14) angeordneten Nocken (23) betätigt ist.

**Claims**

1. A motor vehicle with a passive belt system,

— which comprises a diagonal safety belt (6) which is displaceable on the vehicle bodywork (2) along the upper edge of an opening (3) for a front side door (4) by way of a device (5) controlled mainly by movements of the side door,
— which safety belt is anchored, approximately in the median plane of the vehicle, to a seat (7) by way a lock (8) and
— extends, by way of a direction-changing element (10) which is vertically adjustably arranged in the rear door-post (9) at the level of the shoulder of the occupant of the vehicle, to
— an automatic coiling mechanism (11) arranged in the rear door-post (9), and further
— the device (5) comprises a transport cable (14) which is arranged along the door opening (3) and which
— co-operates with an electric drive controlled by a switch actuated by the movements of the side door, and
— said transport cable being connected with the safety belt (6) by way of a dog (15),

characterised in

— that the dog (15), slidable on the safety belt (6), is firmly connected to the transport cable (14) by way of a rope (16) of constant length,
— that the direction-changing element (10) is displaceably arranged in a guide (18) extended from the shoulder-level zone by way of the upper end zone of the rear door-post (9) and
— can be adjusted in the shoulder-level zone by a stop (19) which can be displaced and immobilised in the guide,
— that a gripping device (20), arranged at a fixed distance from the linkage point (21) of the rope (16), is provided in that portion of the transport cable contained within the rear door-post, said gripping device being provided for

— displacement of the direction-changing element (10) in the upper end zone of the rear door-post (9) during the final belt release phase,

— during which phase the rope (16) is guided by a diverting device (22) solid with the bodywork and arranged in the upper end zone of the front door-post (13).

2. A belt system according to claim 1, characterised in that the diverting device (22) is a roller.

3. A belt system according to claim 1, characterised in that a limit switch (24) is arranged on the stop (19) and is actuated by a cam (23) provided on the transport cable (14).

**Revendications**

1. Véhicule automobile comportant un système de ceinture passive,

— qui comporte une ceinture de sécurité en diagonale (6) susceptible d'être déplacée contre la carrosserie (2) du véhicule le long du bord supérieur d'une échancrure de portière (3) d'une portière latérale (4) par l'intermédiaire d'un dispositif commandé essentiellement par les mouvements de cette portière latérale,

— cette ceinture de sécurité étant ancrée à peu près dans le plan médian du véhicule sur un siège (7) par l'intermédiaire d'une serrure (8), et qui s'étend par l'intermédiaire d'un élément de renvoi (10) disposé en étant réglable en hauteur, à la hauteur des épaules du passager du véhicule contre le montant arrière (9) de la portière, vers un dispositif automatique d'enroulement (11) disposé dans le montant arrière (9) de la portière,

— le dispositif (5) comportant un câble transporteur (14) disposé le long de l'échancrure (3) de la portière et qui coopère avec un entraîsement électrique commandé par un commutateur actionné par les mouvements de la portière latérale, et est en liaison par l'intermédiaire d'un organe d'entraînement (15) avec la ceinture de sécurité (6),

véhicule caractérisé en ce que:

— l'organe d'entraînement (15) disposé sur la ceinture de sécurite (6) en étant susceptible de glisser sur elle, est relié au câble transporteur (14) par l'intermédiaire d'un cordon (16) de longueur constante,

— l'élément de renvoi (10) est disposé mobile en translation dans un guidage (18) prolongé à partir du voisinage du niveau des épaules du passager au-delà de la partie terminale supérieure de montant arrière (9) de la portière, et il est réglable en hauteur au voisinage du niveau des épaules du passager par une butée (19) susceptible de se déplacer et d'être bloquée dans le guidage (18),

— un organe de prise (20), disposé à une distance fixe de l'articulation (21) du cordon (16), est prévu sur la partie du câble transporteur s'étendant dans le montant arrière de la portière pour déplacer l'élément de renvoi (10) dans la zone terminale supérieure du montant arrière (9) de la portière, dans le phase terminale de l'enlèvement de la ceinture, pendant laquelle le cordon (16) est guidé par-dessus un dispositif de déviation (22) disposé à poste fixe sur la carrosserie dans la partie terminale supérieure du montant avant (13) de la portière.

2. Système de ceinture selon la revendication 1, caractérisé en ce que le dispositif de déviation (22) est un galet.

3. Système de ceinture selon la revendication 1, caractérisé en ce qu'un commutateur terminal (24) est disposé sur la butée (19), commutateur qui est actionné par une came (23) disposée sur le câble transporteur (14).

Fig.1

0 041 159

Fig. 2

Fig. 3

Fig. 4